# EUROPÄISCHE PATENTSCHRIFT

(11) **EP 3 938 298 B1**
(45) Veröffentlichungstag und Bekanntmachung des Hinweises auf die Patenterteilung: **22.05.2024**
(21) Anmeldenummer: 20705656.5
(22) Anmeldetag: 12.02.2020
(51) Int. Cl.: B65G 47/52, B65G 47/86

(54) **TRANSPORTVORRICHTUNG UND VERFAHREN ZUM UM EINE VERTIKALE MASCHINENACHSE UMLAUFENDEN TRANSPORT VON BEHÄLTERN**
TRANSPORT DEVICE AND METHOD FOR TRANSPORTING CONTAINERS IN A MANNER REVOLVING AROUND A VERTICAL MACHINE AXIS
DISPOSITIF DE TRANSPORT ET PROCÉDÉ POUR LE TRANSPORT DE RÉCIPIENTS EN CIRCULATION AUTOUR D'UN AXE DE MACHINE VERTICAL

(30) Priorität: 11.03.2019 DE 102019106075
(43) Veröffentlichungstag der Anmeldung: 19.01.2022
(73) Patentinhaber: KHS GmbH, 44143 Dortmund (DE)
(72) Erfinder: SCHUG, Nils, 55499 Riesweiler (DE); FAHLDIECK, Andreas, 55743 Idar-Oberstein (DE); WOLF, Uwe, 55593 Rüdesheim (DE)
(86) Internationale Anmeldenummer: PCT/EP2020/053662
(87) Internationale Veröffentlichungsnummer: WO 2020/182402

(56) Entgegenhaltungen:
- EP-A1- 2 604 553
- JP-A- 2011 063 331
- JP-A- 2015 125 017

## Beschreibung

Die Erfindung betrifft eine Transportvorrichtung sowie ein Verfahren zum um eine vertikale Maschinenachse umlaufenden Transport und selektiven Auswerfen von Behältern.

Transportvorrichtungen und Verfahren zum um eine vertikale Maschinenachse umlaufenden Transport von Behältern sind in vielfältiger Ausgestaltung aus dem Stand der Technik bekannt und werden dabei beispielsweise bei der Herstellung und beim Befüllen von Nahrungsmittelbehältern und insbesondere Kunststoff-Getränkeflaschen dazu verwendet, Behälter zu transportieren sowie typischerweise auch fehlerhafte Behälter aus dem Produktionsprozess zu entfernen. Aufgrund der hohen Produktionsgeschwindigkeit und der damit verbundenen Transportrate von üblicherweise über 80.000 Behältern pro Stunde muss der Auswurfprozess sehr schnell erfolgen, damit nicht auch ein dem auszuwerfenden Behälter nachfolgend transportierter Behälter ausgeworfen oder beschädigt wird.

Aus dem Stand der Technik sind bereits Fördervorrichtungen aus mehreren Transportsternen bekannt, die bei entsprechend hohen Transportraten ein Überleiten eines Behälters von einem Transportstern auf einen anderen Transportstern ermöglichen. Die EP 2 604 553 A1 offenbart zum Beispiel eine Fördervorrichtung für Artikel, die mit einem ersten Förderer versehen ist, der einen Einlassabschnitt für zu transportierende Artikel und einen Auslassabschnitt für die Artikel aufweist. Weiterhin weist die Fördervorrichtung einen zweiten Förderer auf, der selektiv mit einem Übergabeabschnitt des ersten Förderers in Verbindung gebracht werden kann. Dazu kann der erste Förderer selektiv in eine erste operative Freigabekonfiguration der Artikel am Auslassabschnitt und in mindestens eine zweite operative Freigabekonfiguration der Artikel an seinem Übergabeabschnitt eingestellt werden. Dabei ist jedoch nur ein mittels der Fördervorrichtung transportierter Artikelstrom, nicht jedoch ein einzelner Artikel umlenkbar, da die Verstellung der operativen Freigabekonfiguration des ersten Förderers nicht schnell genug möglich ist.

Ferner ist aus der Druckschrift JP 2011 063331 A ein Transportstern zum Transportieren von Preforms bekannt, welcher einen Auswurfmechanismus aufweist. Zudem sieht diese Druckschrift auch eine nach unten gerichtete Luftdüse vor, die einen auf die ausgeworfenen Preforms gerichteten Luftstrahl erzeugt.

Die JP 2011 063331 A offenbart eine Transportvorrichtung nach dem Oberbegriff des Anspruchs 1 und ein Verfahren nach dem Oberbegriff des Anspruchs 11.

Der Erfindung liegt daher die Aufgabe zu Grunde, eine Transportvorrichtung sowie ein entsprechendes Verfahren bereitzustellen, die besonders zuverlässig und präzise ein selektives Auswerfen eines einzigen Behälters aus einer Transportvorrichtung ermöglichen, ohne dass weitere transportiere Behälter davon beeinflusst werden.

Die Aufgabe wird erfindungsgemäß durch eine Transportvorrichtung gemäß Anspruch 1 sowie ein Verfahren gemäß Anspruch 11 gelöst. Vorteilhafte Weiterbildungen der Erfindung sind in den abhängigen Ansprüchen angegeben.

Die erfindungsgemäße Transportvorrichtung zum um eine vertikale Maschinenachse umlaufenden Transport von Behältern weist dazu eine ortsfeste Basiseinheit und eine gegenüber der Basiseinheit rotierbare und/oder verschiebliche Transporteinheit der Transportvorrichtung auf, wobei an der Transporteinheit mehrere Greifer jeweils zum Halten eines hängend zu transportierenden Behälters angeordnet sind. An der Basiseinheit ist ortsfest im Bereich einer Auswurfposition entlang der Transportbahn der Behälter ein Stellmittel zum selektiven Auswerfen einzelner Behälter angeordnet und der Greifer weist einen Öffnungshebel auf, um den Greifer bei einem Zusammenwirken des Öffnungshebels mit dem Stellmittel auf einem die Auswurfposition umfassenden Winkelbereich zumindest teilweise zu öffnen. Zudem ist eine selektiv aktivierbare Luftdüse in der Auswurfposition an der Basiseinheit angeordnet, um einen Behälter aus dem zumindest teilweise geöffneten Greifer auszuwerfen.

Das erfindungsgemäße Verfahren zum um eine vertikale Maschinenachse umlaufenden Transport von Behältern weist als ersten Verfahrensschritt zunächst ein Transportieren eines in einem Greifer der Transportvorrichtung gehaltenen Behälters bis zu einer Auswurfposition auf, wobei der Greifer im Bereich der Auswurfposition an einem ortsfest an einer feststehenden Basiseinheit angeordneten Stellmittel zum wahlweisen Zusammenwirken des Stellmittels mit einem Öffnungshebel des Greifers vorbeigeführt wird, um den Greifer dabei zumindest zeitweise und zumindest teilweise zu öffnen, wobei der Greifer bevorzugt wahlweise auch vollständig geschlossen gehalten werden kann. Dadurch erfolgt in der Auswurfposition ein selektives Auswerfen des Behälters aus dem zumindest teilweise geöffneten Greifer, das durch einen Luftstoß aus einer Luftdüse unterstützt wird.

Eine derartige Ausgestaltung der erfindungsgemäßen Transportvorrichtung sowie des erfindungsgemäßen Verfahrens ermöglichen es in vorteilhafter Weise ein besonders zuverlässiges und präzises Auswerfen eines einzigen selektierten Behälters aus einem der Greifer der Transportvorrichtung, ohne dass weitere transportiere Behälter davon beeinflusst werden. Die Verwendung einer Luftdüse zum Erzeugen eines Luftstoßes bzw. -strahls, der einen in einem zumindest zeitweise und zumindest teilweise geöffneten Greifer befindlichen Behälter selektiv auswirft, ermöglicht dabei in besonders einfacher Weise eine Selektion eines einzelnen Behälters auch bei sehr hohen Transportgeschwindigkeiten bzw. bei Transportraten von über 80.000 Behältern pro Stunde.

Bei der Transportvorrichtung kann es sich zunächst um eine beliebige Vorrichtung oder eine Gruppe von Vorrichtungen handeln, die zum Transport von Behältern, insbesondere zahlreichen identischen Behältern, um eine Maschinenachse der Transportvorrichtung herum, d.h. entlang einer kreisförmigen Bahn, vorgesehen ist, wobei bevorzugt ein Transport der Behälter einzeln erfolgt. Dabei ist die Maschinenachse bezogen auf eine Aufstellage der Transportvorrichtung auf einem horizontalen Untergrund bevorzugt vertikal angeordnet. Die Transportvorrichtung ist besonders bevorzugt an einer Anlage zum Herstellen und/oder zum Füllen von Behältern, insbesondere Flaschen, angeordnet bzw. ein integraler Teil einer solchen Anlage. Speziell bevorzugt wird, dass die Transportvorrichtung als Transportstern bzw. Greiferstern gebildet ist.

Obwohl die Transportvorrichtung die Behälter in einer beliebigen Lage transportieren kann, ist ein Transport von stehenden bzw. aufrecht gehaltenen Behältern bevorzugt. Dabei werden die Behälter erfindungsgemäß hängend transportiert, wobei dies nicht zwingend ein ausschließlich hängender Transport sein muss, sondern ein kleinerer Teil des Gewichts des zu transportierenden Behälters auch anderweitig getragen werden kann. Beispielsweise ist denkbar, dass der hängend transportierte Behälter seitlich oder an einem Teil seiner Unterseite abgestützt wird, um ein Schwingen oder Schaukeln der transportierten Behälter zu verhindern. Insbesondere kann der Boden bzw. die Unterseite des zu transportierenden Behälters dazu mit einem Anschlag, insbesondere einem radial innen angeordneten Anschlagelement, in Kontakt sein. Ganz besonders bevorzugt ist die Transportvorrichtung zum ausschließlich hängenden Transport der Behälter gebildet, wobei insbesondere bevorzugt jeder zu transportierende Behälter ausschließlich von einem einzigen Greifer gehalten wird und/oder keinen Kontakt zu weiteren Teilen der Transportvorrichtung aufweist. Weiterhin besonders bevorzugt werden die Behälter, insbesondere Flaschen, an einem Neckring bzw. einem ringförmig ausgestellten Bereich unterhalb einer Schrauböffnung beim Transport mittels des Greifers gehalten.

Grundsätzlich können die Behälter beliebige Artikel zum zumindest teilweisen Umschließen von Waren sein, wobei die Behälter bevorzugt zum Verpacken von Nahrungsmitteln, insbesondere für Getränke bzw. flüssige Nahrungsmittel, vorgesehen sind. Ganz besonders bevorzugt sind die Behälter Flaschen, Dosen oder dergleichen. Dabei können die Behälter zunächst aus einem beliebigen Material und/oder aus beliebig vielen Teilen gebildet sein. Bevorzugt sind die Behälter jedoch zumindest teilweise aus Kunststoff, insbesondere PET und/oder Polyethylen, und besonders bevorzugt ausschließlich daraus gebildet. Ebenfalls bevorzugt sind die Behälter zur Massenproduktion und/oder zur Massenverarbeitung geeignet, insbesondere mit einer Transportrate von wenigstens 50.000 Behältern pro Stunde, besonders bevorzugt mit wenigstens 80.000 Behältern pro Stunde.

Unter einem Auswerfen eines Behälters wird generell ein Vorgang verstanden, bei dem ein Behälter aus der Transportvorrichtung an einer vorbestimmten Position entfernt wird. Dabei kann das Auswerfen ein ungeleitetes Entfernen aus der Transportvorrichtung im Sinne eines Fallenlassens oder Herausschleuderns oder aber auch ein Ausleiten sein, wobei der ausgeleitete Behälter entlang einer definierten Bahn aus dem Transportstern entfernt wird. Ein selektives Auswerfen bedeutet, dass ein zuvor bestimmter Behälter gezielt aus dem Produktions- bzw. Bearbeitungsprozess während des Transports mittels der Transportvorrichtung ausgeworfen wird. Es erfolgt also keine willkürliche Umstellung des Transportweges, um eine größere Anzahl einzeln unbestimmter Behälter umzulenken, sondern es wird ein einzelner oder mehrere einzelne aufeinanderfolgende Behälter, die insbesondere zuvor jeweils einzeln dazu selektiert wurden, aus der Transportvorrichtung entfernt. Dabei kann die Bestimmung des auszuwerfenden Behälters in beliebiger Weise erfolgen, beispielsweise durch eine optische Detektion nach Defekten und/oder Verunreinigungen.

Die ortsfeste Basiseinheit ist der Teil der Transportvorrichtung, der die Transportvorrichtung am Aufstellort und/oder in der Aufstellage festlegt und gegenüber dem darunter befindlichen Untergrund unbewegt ist. Dabei kann es sich um einen einfachen Ständer oder Rahmen handeln. Alternativ kann der Basisteil jedoch auch beliebige weitere funktionale Einheiten und/oder Module aufweisen, die Aufgaben im Rahmen eines Herstellungs- oder Bearbeitungsprozesses der Behälter erfüllen. Zudem kann die Basiseinheit auch Teil einer größeren Anlage sein, in die die erfindungsgemäße Transportvorrichtung integriert ist.

Die rotierbare und/oder verschiebliche Transporteinheit ist dagegen der Teil der Transportvorrichtung, mittels dem die zu transportierenden Behälter durch den Raum bewegt werden. Dazu kann die gesamte Transporteinheit als Ganzes beweglich sein, wie es bei einem Transportstern der Fall ist, oder aber aus einer Mehrzahl beweglicher, ggf. auch zueinander beweglicher Teile gebildet sein. Eine der Funktionen der Transporteinheit ist es dabei, die Greifer zum Transport jeweils eines Behälters aufzunehmen und bevorzugt gegenüber der Basiseinheit beweglich festzulegen.

Ein Greifer im Sinne der Erfindung ist jede Vorrichtung, die vorgesehen ist, einen Behälter einzeln kraftschlüssig und/oder formschlüssig zu halten. Dabei weist der Greifer bevorzugt zwei Greifarme auf, von denen einer oder beide aufeinander zu beweglich sind und dadurch einen Behälter halten können. Dazu ist der Greifer wenigstens zwischen einer geöffneten Stellung zur Aufnahme eines Behälters und einer geschlossenen Stellung zum Halten eines Behälters verstellbar. Bevorzugt ist der Greifer dabei, insbesondere mittels einer Feder, auf die geschlossene Stellung hin vorgespannt. Weiterhin bevorzugt sind alle Greifer der Transportvorrichtung identisch zueinander gebildet. Schließlich sind alle Greifer an der Transporteinheit bevorzugt in gleichem Abstand zueinander und/oder gleichmäßig über die Länge bzw. den Umfang verteilt.

Die Auswurfposition ist diejenige Position entlang des Verlaufs der Transportvorrichtung an der die auszuwerfenden Behälter gezielt aus der Transportvorrichtung entfernt werden. Dabei kann die Auswurfposition ein Punkt entlang der Bewegungsbahn der Behälter in der Transportvorrichtung sein. Alternativ und insbesondere bei Transportvorrichtungen mit hohen Transportraten bzw. -geschwindigkeiten kann die Auswurfposition auch ein kurzer Bahnabschnitt der Transportvorrichtung, insbesondere einer runden Transportbahn der Behälter in einem Transportstern sein, wobei der Bahnabschnitt bevorzugt nicht länger als der Durchmesser von drei Behältern und/oder maximal genauso lang ist, wie der Abstand eines Greifers zu den benachbarten zwei Greifern, da nur so ein selektiver Auswurf eines einzelnen Behälters möglich ist.

Das Stellmittel kann grundsätzlich als einzelnes Bauteil oder als Baugruppe beliebig gebildet sein und ist dabei vorgesehen, mit dem Öffnungshebel des Greifers wechselwirken zu können, um an der Auswurfposition den Greifer zumindest zeitweise und zumindest teilweise öffnen zu können. Dazu ist das Stellmittel ortsfest an der Basiseinheit angeordnet, wobei es sowohl unmittelbar an der Basiseinheit, als auch mittelbar über weitere Bauteile gegenüber der Basiseinheit ortsfest angeordnet sein kann. Darüber hinaus ist auch eine bewegliche Anordnung an der Basiseinheit möglich, wobei auch dann eine zeitweilige ortsfeste Festlegung des Stellmittels erfolgen kann. Das zumindest zeitweise und zumindest teilweise Öffnen des Geifers mittels des Stellmittels soll das Auswerfen des Behälters aus dem Greifer im Bereich der Auswurfposition ermöglichen. Dabei wird der Greifer so weit geöffnet, dass der Behälter vom Greifer vollständig freigegeben wird, d.h., die Öffnungsweite des Greifers ist dabei größer als der Durchmesser des durch den Greifer gehaltenen Abschnitts des Behälters. Gegenüber einer solchen, nur teilweisen Öffnung des Greifers ist bevorzugt eine Öffnung des Greifers mit noch einer größeren Öffnungsweite, insbesondere zur Aufnahme eines Behälters, möglich. Das Öffnen des Greifers mittels des Stellmittels erfolgt bevorzugt nur zeitweise und maximal über die Dauer der Wechselwirkung des Stellmittels mit dem Öffnungshebel des Greifers. Besonders bevorzugt ist der Greifer nur über einen Teil der Dauer der Wechselwirkung des Stellmittels mit dem Öffnungshebel so weit geöffnet, dass ein im Greifer befindlicher Behälter ausgeworfen wird bzw. werden kann.

Der Öffnungshebel ist Teil des Greifers oder ortsfest gegenüber dem Greifer, insbesondere an der Transporteinheit, angeordnet und dazu vorgesehen, den Greifer zumindest zeitweise und zumindest teilweise zu öffnen, wenn der Öffnungshebel mit dem Stellmittel zusammenwirkt. Das Zusammenwirken des Stellmittels mit dem Öffnungshebel des Greifers kann dabei mechanisch oder in beliebiger anderer Weise und dabei insbesondere auch berührungslos, beispielsweise magnetisch, erfolgen.

Bevorzugt sind sowohl das Stellmittel als auch der Öffnungshebel immer aktiv und wechselwirken entsprechend grundsätzlich miteinander, wobei dann besonders bevorzugt der Greifer so weit geöffnet wird, dass der Behälter auch von dem teilweise geöffneten Greifer nicht mehr gehalten wird und insbesondere der Auswurf des Behälters aus dem Greifer von alleine und nur durch den Luftstoß aus der Luftdüse unterstützt erfolgt. Dabei wird bei einer Ausführungsvariante der Greifer nur so kurz geöffnet, dass ein Behälter ohne die Unterstützung der Luftdüse nicht von alleine aus dem Greifer ausgeworfen wird.

Alternativ können aber auch das Stellmittel und/oder der Öffnungshebel des Greifers bzw. der gesamte Greifer so einstellbar sein, dass eine Wechselwirkung beider Bauteile gesteuert werden kann und insbesondere nur wahlweise erfolgt.

Das selektive Auswerfen kann grundsätzlich sowohl dadurch erreicht werden, dass alle Greifer immer teilweise geöffnet werden und die Auswahl des auszuwerfenden Behälters über die Steuerung der Luftdüse erfolgt, als auch, dass bereits durch das Stellmittel und/oder den Öffnungshebel selektiert wird, also die Wechselwirkung des Stellmittels mit dem Öffnungshebel wahlweise erfolgt, wodurch bestimmt werden kann, welcher Greifer zumindest teilweise oder sogar vollständig geöffnet wird. Dabei kann besonders bevorzugt ein Behälter aus einem ungeöffneten bzw. vollständig geschlossenen Greifer mittels der Luftdüse bzw. eines damit erzeugten Luftstoßes bzw. -strahls nicht entfernt werden.

Bei der Luftdüse kann es sich um eine beliebige Düse handeln, die zur Abgabe eines gezielten Luftstoßes geeignet ist. Bevorzugt ist die Luftdüse derart gebildet und/oder gesteuert, dass damit ein Luftstoß bzw. -strahl erzeugt wird, der lediglich Behälter aus zumindest zeitweise und zumindest teilweise geöffneten Greifern auswerfen kann, während besonders bevorzugt ein auf einen in einem geschlossenen Greifer gerichteter Luftstoß bzw. -strahl nicht zu einem Auswerfen des Behälters führt. Die Luftdüse ist bei einer als Transportstern gebildeten Transportvorrichtung bevorzugt radial zum Äußeren des Transportsterns gerichtet. Alternativ oder zusätzlich ist die Luftdüse bevorzugt entgegen einer Aufnahmerichtung eines Behälters in den Greifer bzw. in Richtung der Öffnung des Greifers zur Freigabe des gehaltenen Behälters gerichtet. Ebenfalls bevorzugt weist die Düse bezogen auf die radiale Richtung eines Transportsterns einen Winkel von 0° - 25°, besonders bevorzugt 0° - 15° und ganz besonders bevorzugt 0° - 10° in der Transportrichtung der Behälter bzw. auf die in die Auswurfposition transportierten Behälter gerichtet auf. Weiterhin bevorzugt ist die Luftdüse selektiv aktivierbar, d.h. die Luftdüse wird nur dann aktiviert, wenn sich ein auszuwerfender Behälter vor der Luftdüse befindet, während die Luftdüse inaktiv bleibt, wenn ein weiterer zu transportierender Behälter vor die Luftdüse bewegt wird.

Weiterhin bevorzugt ist die Luftdüse justierbar bzw. verstellbar, beispielsweise um die Transportvorrichtung an den Transport unterschiedlich großer Behälter oder unterschiedliche Transportgeschwindigkeiten anzupassen. Dazu ist die Luftdüse bevorzugt in der Höhe bzw. in axialer Richtung der Maschinenachse verstellbar, wodurch in einfacher Weise die Position entlang der Mittellängsachse des hängend gehaltenen Behälters, an der der Luftstoß trifft, eingestellt werden kann. Alternativ oder zusätzlich ist die Luftdüse bevorzugt rotierbar, insbesondere in bzw. entgegen der Transportrichtung der Behälter. Die Einstellung der Luftdüse kann dabei sowohl automatisch angetrieben als auch händisch erfolgen.

Bei einer bevorzugten Ausgestaltung der erfindungsgemäßen Transportvorrichtung ist das Stellmittel auf einer Seite des Greifers angeordnet, die einer Öffnung des Greifers zur Aufnahme des Behälters gegenüberliegt. Zusätzlich oder alternativ ist das Stellmittel bei einer runden Transportvorrichtung, insbesondere einem Transportstern, radial innen in Bezug zu der Position der Greifer angeordnet, wodurch ein besonders platzsparender Aufbau sowie eine besonders störungsfreie Wechselwirkung des Stellmittels mit dem Öffnungshebel erreicht werden kann. Weiterhin bevorzugt ist das Stellmittel in axialer Richtung eines Transportsterns und/oder bezogen auf eine Gebrauchslage der Transportvorrichtung in der Höhe der Greifer und insbesondere des Öffnungshebels der Greifer angeordnet.

Gemäß einer vorteilhaften Weiterbildung der erfindungsgemäßen Transportvorrichtung weist der Greifer zwei zueinander verschwenkbare Greifarme zum Greifen eines Behälters auf, wobei der Öffnungshebel bevorzugt an einem oder beiden Greifarmen und besonders bevorzugt dabei auf einer dem Bereich des Greifers zur Ausnahme des Behälters gegenüberliegenden Seite einer Verschwenkachse der Greifarme angeordnet ist, wodurch eine besonders einfache Konstruktion und zugleich eine besonders zuverlässige und ausfallsichere Funktion des Greifers sichergestellt ist. Insbesondere bevorzugt ist der Öffnungshebel einstückig mit einem der Greifarme gebildet. Weiterhin bevorzugt ist der Öffnungshebel an dem in einer Transportrichtung der Transportvorrichtung vorderen bzw. ersten Greifarm angeordnet. Ebenfalls bevorzugt ist der Öffnungshebel derart am Greifarm angeordnet, dass ein Vorbeiführen des Greifers mit dem Öffnungshebel an dem ortsfesten Stellmittel zum zumindest zeitweisen und zumindest teilweisen Öffnen des Greifers führt bzw. führen kann, wenn das Stellmittel aktiv ist. Darüber hinaus bevorzugt ist der Öffnungshebel an den Greifern eines Transportsterns radial nach Innen ragend und dabei insbesondere bevorzugt zugleich gegen die Transportrichtung des Transportsterns geneigt angeordnet.

Bei einer bevorzugten Ausführung der erfindungsgemäßen Transportvorrichtung ist vorgesehen, dass das Stellmittel eine Rolle ist, die besonders bevorzugt direkt bzw. mechanisch mit dem Öffnungshebel zusammenwirkt, wodurch abermals ein besonders einfacher Aufbau erreicht wird. Dabei ist die Rolle bevorzugt rotierbar gegenüber der Basiseinheit angeordnet, wobei besonders bevorzugt die Rotationsachse der Rolle parallel bzw. koaxial zur Rotationsachse des Transportsterns und/oder senkrecht zu einer Transportrichtung der Transportvorrichtung ausgerichtet ist. Grundsätzlich kann die Rolle dabei aus einem beliebigen Material gebildet sein. Bevorzugt ist die Rolle einstückig und/oder aus einem Kunststoff oder aus Gummi gebildet.

Alternativ zu einer mechanischen Wechselwirkung des Stellmittels mit dem Öffnungshebel kann das Stellmittel auch berührungslos, insbesondere magnetisch, mit dem Öffnungshebel zusammenwirken und dabei bevorzugt als ein Elektromagnet, insbesondere elektrisch schaltbar, oder als Permanentmagnet, insbesondere mechanisch schaltbar, gebildet sein, wodurch die mechanische Belastung beim Betrieb der Transportvorrichtung deutlich verringert wird. Zur magnetischen Wechselwirkung ist bevorzugt an dem Stellmittel und/oder insbesondere bevorzugt an dem Öffnungshebel ein Magnet angeordnet. Dabei ist es möglich, dass an einem von dem Stellmittel oder dem Öffnungshebel lediglich ein Bereich aus einem magnetisch anziehbaren Material bzw. magnetischen Werkstoff derart angeordnet ist, dass dieser mit einem am Öffnungshebel oder dem Stellmittel festgelegten Magneten wechselwirken kann. Eine Ausgestaltung des Magneten als Elektromagnet macht das Stellmittel in einfacher Weise elektrisch schaltbar, d.h. wahlweise aktivierbar und deaktivierbar, sodass das zumindest zeitweise und zumindest teilweise Öffnen des Greifers nur dann erfolgt, wenn sich in diesem Greifer ein auszuwerfender Behälter befindet. Dabei ist es ganz besonders bevorzugt, dass das einen Elektromagneten aufweisende Stellmittel mit einem am Öffnungshebel angeordneten Permanentmagneten zusammenwirkt.

Gemäß einer bevorzugten Ausgestaltung der erfindungsgemäßen Transportvorrichtung ist die Luftdüse an der Auswurfposition derart angeordnet und/oder ausgerichtet, dass ein mittels der Luftdüse erzeugter Luftstrahl den auszuwerfenden Behälter derart trifft, dass dieser die radial und/oder vertikal nach unten erfolgende Bewegung des Behälters beim Auswerfen unterstützt. Insbesondere bevorzugt ist die Luftdüse an der Auswurfposition derart angeordnet und/oder ausgerichtet, dass ein mittels der Luftdüse erzeugter Luftstrahl die Oberfläche des auszuwerfenden Behälters bzw. der auszuwerfenden Flasche, insbesondere in deren Mitte bzw. im Bereich der Schwerpunkthöhe des Behälters, trifft, wodurch in einfacher Weise ein zuverlässiges Auswerfen des transportierten, zum Auswurf selektierten Behälters erreicht werden kann und/oder in einem Winkel trifft, der radial zur vertikalen Maschinenachse (MA) bis zu 10° in der Transportrichtung geneigt ist. Dabei wird der Behälter von dem Luftstrahl bevorzugt derart bzw. in einer Position getroffen, dass der Behälter im wesentlichen rotationsfrei aus dem Greifer entfernt wird. Um insbesondere eine Rotation entlang der Höhe des im Greifer gehaltenen Behälters zu verhindern, ist der Luftstrahl besonders bevorzugt auf den Flaschenhals oder einen an den Greifer angrenzenden Bereich des Behälters gerichtet. Alternativ bevorzugt ist die Luftdüse oberhalb des Massenschwerpunktes bzw. in der Mitte des Behälters und besonders bevorzugt zwischen dem Greifer und dem Massenschwerpunkt bzw. der Mitte angeordnet, sodass der aus der Luftdüse kommende Luftstrahl zu einer Rotation des vom Greifer gehaltenen Teils des Behälters von dem Greifer wegführt.

Bei einer vorteilhaften Weiterbildung der erfindungsgemäßen Transportvorrichtung ist die Luftdüse und bevorzugt die gesamte Transportvorrichtung zum Auswerfen derart gebildet, dass ein vollständiges Auswerfen des Behälters in der Auswurfposition in weniger als 200 ms, bevorzugt weniger als 100 ms, besonders bevorzugt weniger als 50 ms und ganz besonders bevorzugt in weniger als 10 ms erfolgt, wodurch ein Auswurf von Behältern auch bei hohen Transportgeschwindigkeiten bzw. -raten möglich ist. Für Transportvorrichtungen zur Behandlung von Behältern und insbesondere von leeren Kunststoffflaschen ist es wichtig, dass der Vorgang des Auswerfens sehr schnell erfolgt, da in diesen Vorrichtungen die Behälter mit einer sehr hohen Geschwindigkeit transportiert werden. Dabei ist es durchaus üblich, dass pro Stunde mindestens 60.000 und insbesondere mindestens 80.000 Behälter durch die Auswurfposition hindurch bewegt werden, sodass die Luftdüse sehr präzise funktionieren muss und der mittels der Luftdüse erzeugte Luftstrahl nur sehr kurz sein darf, um gezielt und selektiv genau einen Behälter zu entfernen und dabei die vorausgehenden und nachfolgenden Behälter nicht zu beeinflussen.

Eine Weiterbildung der erfindungsgemäßen Transportvorrichtung sieht vor, dass der Greifer bei einem Zusammenwirken des Stellmittels mit dem Öffnungshebel nur im Bereich der Auswurfposition erfolgt und/oder der Greifer dabei so weit geöffnet wird, dass der auszuwerfende Behälter mit einem Auflage-, Sicherungs- oder Neckring auf dem Greifer aufliegend bzw. entlangleitend ausgeworfen wird, sodass der erfolgende Auswurf des Behälters mittels der Luftdüse unterstützt wird, wodurch ein besonders einfacher mechanischer Aufbau der Vorrichtung mit wenigen beweglichen Teilen erreicht wird.

Um das selektive, zumindest zeitweise und zumindest teilweise Öffnen des Greifers in der Auswurfposition besser steuern zu können, ist denkbar, dass das Stellmittel derart beweglich an der Basiseinheit angeordnet ist, dass das Stellmittel zwischen einer Stellposition mit einer Wechselwirkung des Stellmittels mit dem Öffnungshebel und einer Transportposition ohne mechanische oder magnetische oder sonstige Wechselwirkung des Stellmittels mit dem Öffnungshebel verschoben werden kann, wodurch eine Wechselwirkung des Stellmittels mit Greifern mit nicht auszuwerfenden Behältern in einfacher Weise vollständig vermieden werden kann. Diese Ausführung der Erfindung ist besonders bevorzugt, wenn das Stellmittel als Rolle gebildet ist. Das Stellmittel ist besonders bevorzugt in axialer Richtung der Rolle und/oder koaxial zu einer Rotations- bzw. Maschinenachse des als Transportstern gebildeten Transportmittels und/oder in der Höhe bezogen auf eine Aufstelllage der Transportvorrichtung beweglich, insbesondere linear verschieblich. Alternativ oder zusätzlich ist auch eine Beweglichkeit radial zu der Rolle und/oder zu einer Rotations- bzw. Maschinenachse des als Transportstern gebildeten Transportmittels denkbar. Um das Stellmittel schnell zwischen der Stellposition und der Transportposition bewegen zu können, ist dieses besonders bevorzugt an einem Linearmotor oder einem Pneumatikzylinder angeordnet.

Gemäß einer vorteilhaften Ausgestaltung der erfindungsgemäßen Transportvorrichtung ist der Öffnungshebel oder der gesamte Greifer zwischen einer Transportstellung und einer Auswurfstellung bewegbar, wobei lediglich in der Auswurfstellung eine Wechselwirkung des Öffnungshebels mit dem Stellmittel möglich ist bzw. erfolgt, wodurch in einfacher Weise eine Selektion eines Greifers mit einem auszuleitenden Behälter erfolgen kann. Dabei ist bevorzugt der gesamte Greifer an der Transportvorrichtung, insbesondere am Transportstern und dabei speziell bevorzugt an einem Sternring des Transportsterns, in der Höhe bezogen auf eine Aufstelllage der Transportvorrichtung und/oder parallel bzw. koaxial zur Rotationsachse des Transportsterns und/oder rechtwinklig zur Transportrichtung der Transportvorrichtung angeordnet. Besonders bevorzugt wird der Greifer aus der Transportstellung, die insbesondere bevorzugt die Ausgangs- bzw. Normalstellung darstellt, in die Auswurfstellung derart angesenkt, dass nur in der Ausleitstellung der Öffnungshebel in den Bereich des Stellmittels gelangt. Weiterhin bevorzugt ist das Stellmittel derart angeordnet, dass der Öffnungshebel in der Transportstellung über das Stellmittel, insbesondere wechselwirkungsfrei, hinweg transportiert wird.

Bei einer bevorzugten Weiterbildung der erfindungsgemäßen Transportvorrichtung ist ein weiteres Stellmittel in einem Bereich vor der Auswurfposition angeordnet, um einen Greifer von einer Transportstellung in eine Auswurfstellung zu verschieben, wobei das weitere Stellmittel bevorzugt ein Hochgeschwindigkeitspusher ist, der besonders bevorzugt elektromagnetisch oder pneumatisch betrieben wird. Das weitere Stellmittel kann grundsätzlich ein beliebiger Aktuator sein, der bevorzugt ein lineares Verschieben innerhalb der zur Verfügung stehenden Zeitspanne, bevorzugt in weniger als 100 ms, besonders bevorzugt in weniger als 50 ms und ganz besonders bevorzugt in weniger als 10ms ermöglicht. Besonders bevorzugt ist das weitere Stellmittel dazu unmittelbar entlang der Transportbahn des zu verstellenden Greifers und ganz besonders bevorzugt ortsfest gegenüber der Basiseinheit angeordnet. Weiterhin bevorzugt umfasst das weitere Stellmittel einen Pneumatikzylinder und/oder einen elektromagnetisch angetriebenen Steller und/oder einen Linearmotor.

Schließlich ist es vorteilhaft, wenn entlang der Transportbahn des Greifers hinter der Auswurfposition ein Rückstellmittel angeordnet ist, um alle in der Auswurfstellung befindlichen Greifer in die Transportstellung rückzustellen, wobei das Rückstellmittel bevorzugt als ortsfest gegenüber der Basiseinheit festgelegte Steuerkurve gebildet ist. Bevorzugt erfolgt das Rückstellen in die Transportstellung und insbesondere dazu ein Anheben der Greifer mittels eines als Steuerkurve gebildeten Rückstellmittels. Alternativ kann das Rückstellmittel in seinem Aufbau auch identisch mit dem weiteren Stellmittel gebildet sein. Besonders bevorzugt ist als Rückstellmittel eine Steuerkurve, die mit dem Öffnungshebel des Greifers zusammenwirkt und den Greifer daran zurück in die Transportstellung verschiebt.

Ein Ausführungsbeispiel der erfindungsgemäßen Transportvorrichtung wird nachstehend mit Bezug auf die Zeichnungen näher erläutert. In den Figuren zeigen:
- Fig. 1: eine Ansicht der Oberseite eines Abschnitts einer Transportvorrichtung zum um eine vertikale Maschinenachse umlaufenden Transport sowie zum selektiven Auswerfen von Behältern im Bereich einer Auswurfposition,
- Fig. 2: eine perspektivische Teilansicht der in Fig. 1 dargestellten Transportvorrichtung zum selektiven Auswerfen von Behältern,
- Fig. 3: eine Ansicht der Unterseite des in Fig. 1 dargestellten Abschnitts der Transportvorrichtung,
- Fig. 4: eine Seitenansicht des in Fig. 1 dargestellten Abschnitts der Transportvorrichtung,
- Fig. 5: eine Frontalansicht des in Fig. 1 dargestellten Abschnitts der Transportvorrichtung, und
- Fig. 6: eine seitliche Schnittansicht des in Fig. 1 dargestellten Abschnitts der Transportvorrichtung.

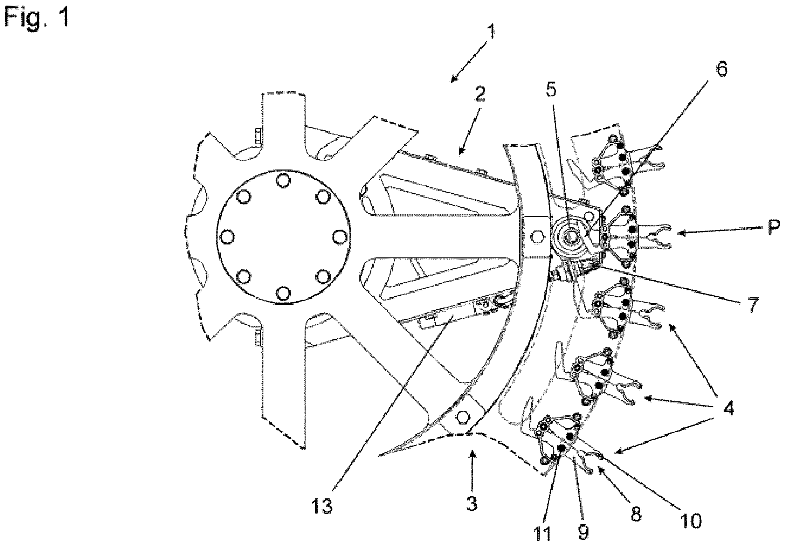

Bei einer in Figur 1 abschnittsweise dargestellten Ausführung einer Transportvorrichtung 1 zum um eine vertikale Maschinenachse umlaufenden Transport sowie zum selektiven Auswerfen von fehlerhaften Flaschen ist eine als Sternring gebildete Transporteinheit 3 drehbar auf einer Basiseinheit 2 gelagert. Die Basiseinheit 2 dient dabei dazu, die Transportvorrichtung 1 lagestabil und ortsfest zu halten. Die Transporteinheit 3 weist eine runde Form auf, wobei gleichmäßig über den Umfang verteilt und dabei nach außen weisend Greifer 4 angeordnet sind. Alle Greifer 4 der Transportvorrichtung 1 sind identisch zueinander gebildet.

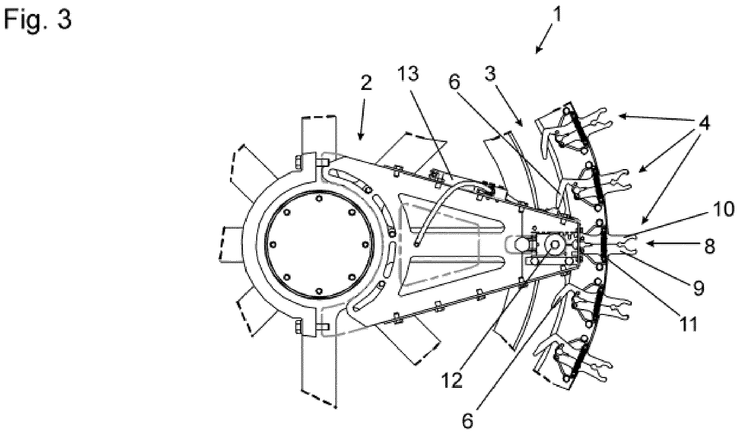

Jeder Greifer 4 ist zur Aufnahme einer Flasche vorgesehen und weist dazu einer Öffnung 8 auf, die durch einen Zwischenraum zwischen zwei Greifarmen 9, 10 des Greifers 4 gebildet wird. Die beiden Greifarme 9, 10 sind jeweils mittels einer Verschwenkachse 11 verschwenkbar gelagert, wodurch die beiden Greifarme 9, 10 aufeinander zu verschwenkt und dadurch zwischen einer geschlossenen und einer geöffneten Stellung des Greifers 4 bewegt werden können (siehe Fig. 3). Dabei ist der Greifer 4 mittels eines Federelements auf die geschlossene Stellung hin vorgespannt, sodass im Greifer 4 eine Flasche ohne aktive Ansteuerung des Greifers 4 gehalten werden kann.

Um eine zuvor selektierte Flasche aus der Transportvorrichtung 1 auswerfen zu können, ist vorgesehen, dass an eine Auswurfposition P entlang der Transportbahn der Flaschen in der Transportvorrichtung 1 zunächst der Greifer 4 soweit teilweise geöffnet wird, dass die Flasche mit verminderter Kraft nach wie vor gehalten wird und dadurch mittels eines Luftstoßes aus dem Greifer 4 ausgeworfen werden kann. Dabei weist der Luftstoß bevorzugt eine Stärke auf, die das Auswerfen einer Flasche aus einem teilweise geöffneten Greifer 4, nicht jedoch aus einem Greifer 4 in der geschlossenen Stellung ermöglicht

Um den Greifer 4 teilweise in der Auswurfposition P zu öffnen, ist im Bereich der Auswurfposition an der Basiseinheit 2 ein als Kunststoffrolle gebildetes Stellmittel 5 angeordnet. Weiterhin weist der Greifer 4 einen Öffnungshebel 6 auf, der einstückig mit dem ersten Greifarm 9 des Greifers 4 gebildet ist. Der Greifarm 9 ist der Öffnung 8 des Greifers 4 in Bezug zur Verschwenkachse 11 des Greifarms 9 gegenüberliegend derart angeordnet und verwinkelt, dass der Öffnungshebel 6 beim Vorbeiführen an dem Stellmittel 5 gedrückt wird und dadurch der Greifer 4 sich teilweise öffnet. Der Öffnungshebel 6 ist dabei radial zum Transportstern nach innen weisend sowie entgegen der Transportrichtung der Transportvorrichtung 1 ausgerichtet verwinkelt, sodass der Öffnungshebel 6 entlang des abrollenden Stellmittels 5 geführt wird und dadurch der Greifer 4 während der Dauer der Wechselwirkung des Stellmittels 5 mit dem Öffnungshebel 6 teilweise geöffnet bleibt.

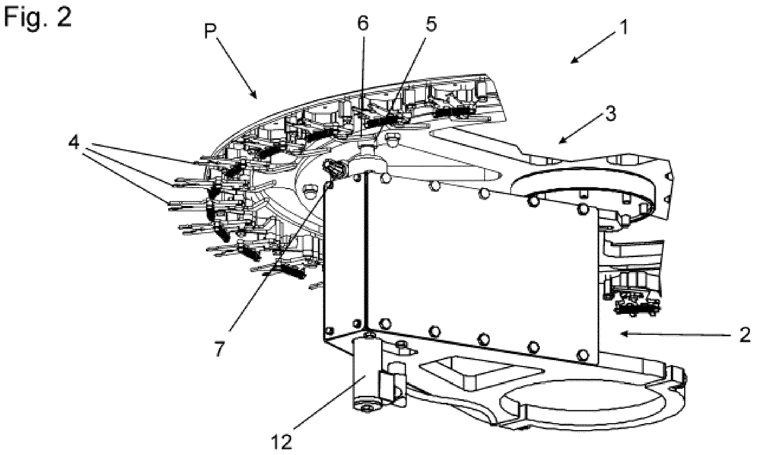

Ebenfalls an der Auswurfposition P und dem Stellmittel 5 in der Transportrichtung der Transportvorrichtung 1 nachfolgend ist eine Luftdüse 7 derart angeordnet, dass damit ein Luftstoß abgegeben werden kann, der eine Flasche in der Auswurfposition P in einem teilweise geöffneten Greifer 4 treffen und somit das Auswerfen unterstützen kann (siehe Fig. 1 und 2). Die Luftdüse 7 wird über eine Luftstoßsteuerung 13 selektiv aktiviert. Auf diese Weise kann eine einzelne, ausgewählte Flasche aus einer Transportvorrichtung 1 ausgeworfen werden, die etwa 80.000 Flaschen pro Stunde transportiert.

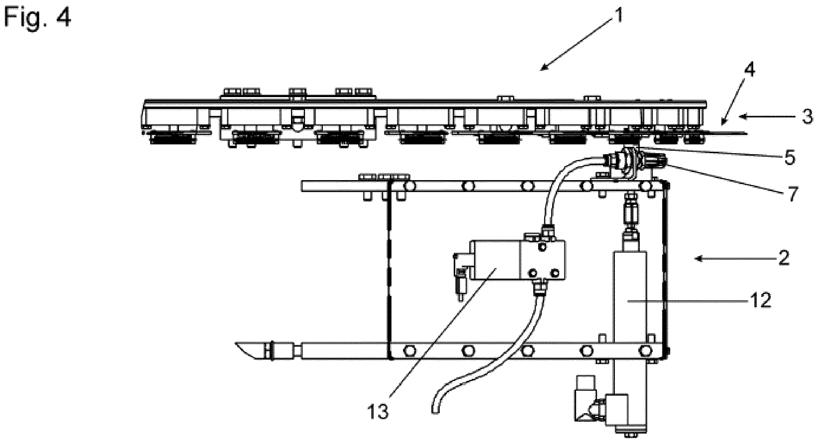

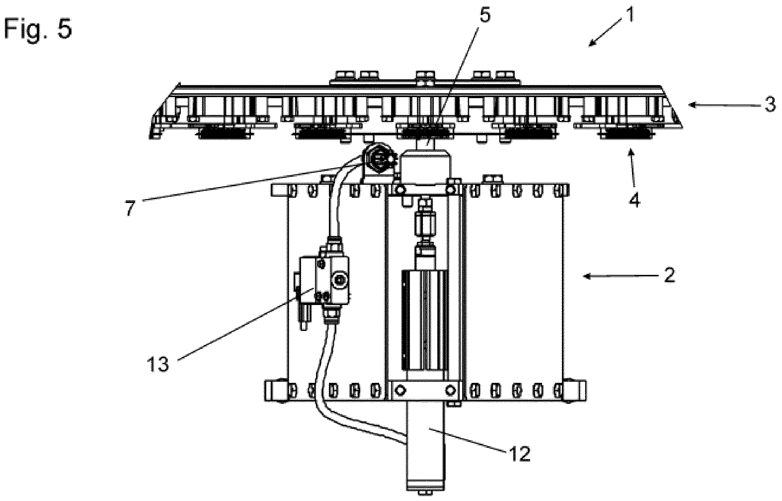

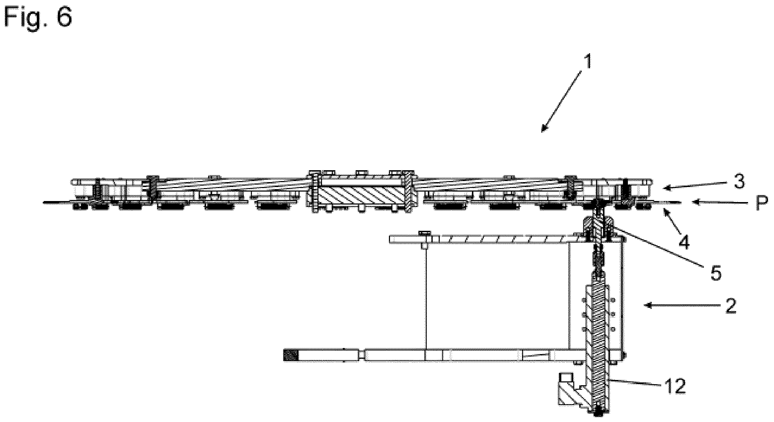

Darüber hinaus kann auch das teilweise Öffnen des Greifers 4 selektiv vorgenommen bzw. deaktiviert werden, indem das Stellmittel 5 soweit abgesenkt wird, dass eine mechanische Wechselwirkung mit einem Öffnungshebel 6 eines Greifers 4 ausgeschlossen ist. Dazu ist das als Rolle gebildet Stellmittel 5 mittels eines Linearantriebs 12 an der Basiseinheit 2 derart festgelegt, dass eine Verschiebung entlang der axialen Richtung der Maschinenachse MA der Transporteinheit 3 gegenüber der Basiseinheit 2 möglich ist (siehe Fig. 2 und 4 - 6).

### Bezugszeichenliste

- 1: Transportvorrichtung zum selektiven Auswerfen
- 2: Basiseinheit
- 3: Transporteinheit
- 4: Greifer
- 5: Stellmittel
- 6: Öffnungshebel
- 7: Luftdüse
- 8: Öffnung des Greifers
- 9: erster Greifarm
- 10: zweiter Greifarm
- 11: Verschwenkachse
- 12: Linearantrieb des Stellmittels
- 13: Luftstoßsteuerung
- P: Auswurfposition
- MA: Maschinenachse

## Patentansprüche

1. Transportvorrichtung (1) zum um eine vertikale Maschinenachse (MA) umlaufenden Transport von Behältern, mit
- einer ortsfesten Basiseinheit (2) und einer gegenüber der Basiseinheit (2) rotierbaren und/oder verschieblichen Transporteinheit (3),
- mehreren an der Transporteinheit (3) angeordneten Greifern (4) jeweils zum Halten eines hängend zu transportierenden Behälters,
- einem ortsfest an der Basiseinheit (2) im Bereich einer Auswurfposition (P) zum selektiven Auswerfen einzelner Behälter angeordneten Stellmittel (5) zum zumindest zeitweisen und zumindest teilweisen Öffnen des Greifers (4), **dadurch gekennzeichnet, dass**
- der Greifer (4) einen Öffnungshebel (6) zum zumindest teilweisen Öffnen des Greifers (4) bei einem Zusammenwirken des Öffnungshebels (6) mit dem Stellmittel (5) auf einem die Auswurfposition (P) umfassenden Winkelbereich aufweist, und dass
- die Transportvorrichtung mit einer in der Auswurfposition (P) an der Basiseinheit (2) angeordneten selektiv aktivierbaren Luftdüse (7) zum Auswerfen des Behälters aus dem Greifer (4) ausgestattet ist.

2. Transportvorrichtung nach Anspruch 1, **dadurch gekennzeichnet, dass** das Stellmittel (5) auf einer einer Öffnung (8) des Greifers (4) gegenüberliegenden Seite und/oder bei einer als Transportstern gebildeten Transportvorrichtung (1) radial innen in Bezug zu der Position der Greifer (4) angeordnet ist.

3. Transportvorrichtung nach Anspruch 1 oder 2, **dadurch gekennzeichnet, dass** der Greifer (4) zwei zueinander verschwenkbare Greifarme (9, 10) zum Greifen eines Behälters aufweist, wobei der Öffnungshebel (6) an einem oder beiden Greifarmen (9, 10) und dabei auf einer der Öffnung (8) des Greifers (4) zur Ausnahme des Behälters gegenüberliegenden Seite einer Verschwenkachse (11) der Greifarme (9, 10) angeordnet ist.

4. Transportvorrichtung nach einem der vorhergehenden Ansprüche, **dadurch gekennzeichnet, dass** das Stellmittel (5) berührungslos mit dem Öffnungshebel (6) zusammenwirkt und dabei als ein Elektromagnet elektrisch schaltbar oder als Permanentmagnet mechanisch schaltbar gebildet sowie an dem Öffnungshebel (6) des Greifers (4) ein Permanentmagnet angeordnet ist.

5. Transportvorrichtung nach einem der vorhergehenden Ansprüche, **dadurch gekennzeichnet, dass** die Luftdüse (7) an der Auswurfposition (P) derart angeordnet und ausgerichtet ist, dass ein mittels der Luftdüse (7) erzeugter Luftstrahl den auszuwerfenden Behälter derart trifft, dass dieser die radial und/oder vertikal nach unten erfolgende Bewegung des Behälters unterstützt.

6. Transportvorrichtung nach einem der vorhergehenden Ansprüche, **dadurch gekennzeichnet, dass** die Luftdüse (7) an der Auswurfposition (P) derart angeordnet und ausgerichtet ist, dass ein mittels der Luftdüse (7) erzeugter Luftstrahl die Oberfläche des auszuwerfenden Behälters in einem Winkel trifft, der radial zur vertikalen Maschinenachse (MA) bis zu 10° in der Transportrichtung geneigt ist.

7. Transportvorrichtung nach einem der vorhergehenden Ansprüche, **dadurch gekennzeichnet, dass** die Luftdüse (7) derart gebildet ist, dass ein vollständiges Auswerfen des Behälters in der Auswurfposition (P) in wenigster als 100 ms erfolgt.

8. Transportvorrichtung nach einem der vorhergehenden Ansprüche, **dadurch gekennzeichnet, dass** ein Zusammenwirken des Stellmittels (5) mit dem Öffnungshebel (6) des Greifers (4) nur im Bereich der Auswurfposition (P) erfolgt und der Greifer (4) dabei so weit geöffnet wird, dass der auszuwerfende Behälter mit einem Auflage-, Sicherungs- oder Neckring auf dem Greifer (4) aufliegend bzw. entlangleitend ausgeworfen wird, sodass der erfolgende Auswurf des Behälters mittels der Luftdüse (7) unterstützt wird.

9. Transportvorrichtung nach einem der vorhergehenden Ansprüche, **dadurch gekennzeichnet, dass** das Stellmittel (5) derart beweglich an der Basiseinheit (2) angeordnet ist, dass das Stellmittel (5) zwischen einer Stellposition mit einer Wechselwirkung des Stellmittels (5) mit dem Öffnungshebel (6) und einer Transportposition ohne mechanische oder magnetische oder sonstige Wechselwirkung des Stellmittels (5) mit dem Öffnungshebel (6) verschieblich ist.

10. Transportvorrichtung nach einem der vorhergehenden Ansprüche, **dadurch gekennzeichnet, dass** das Stellmittel (5) eine Rolle ist, die direkt mit dem Öffnungshebel (6) zusammenwirkt.

11. Verfahren zum um eine vertikale Maschinenachse (MA) umlaufenden Transport von Behältern, mit den Schritten
- Transportieren eines in einem Greifer (4) der Transportvorrichtung (1) gehaltenen Behälters bis zu einer Auswurfposition (P),
- Vorbeiführen des Greifers (4) an einem ortsfest im Bereich der Auswurfposition (P) angeordneten Stellmittel (5) zum wahlweisen Zusammenwirken des Stellmittels (5) mit einem Öffnungshebel (6) des Greifers (4), um den Greifer (4) zumindest teilweise zu öffnen, und
- dadurch ein selektives Auswerfen eines Behälters aus dem Greifer (4), das durch einen Luftstrahl aus einer in der Auswurfposition (P) angeordneten Luftdüse (7) unterstützt wird,
**dadurch gekennzeichnet, dass** dazu eine Transportvorrichtung (1) nach wenigstens einem der Ansprüche 1 bis 10 verwendet wird.

## Claims

1. Transport device (1) for transporting containers in a manner revolving about a vertical machine axis (MA), with
- a stationary base unit (2) and a transport unit (3) which can be rotated and/or displaced relative to the base unit (2),
- a plurality of grippers (4) arranged at the transport unit (3), each holding a container to be transported in a suspended manner,
- an actuator (5) arranged in a stationary manner on the base unit (2) in the region of an ejection position (P) for selectively ejecting individual containers, for at least temporarily and at least partially opening the gripper (4), **characterised in that**
- the gripper (4) has an opening lever (6) for at least partially opening the gripper (4) when the opening lever (6) interacts with the actuator (5) in an angular range encompassing the ejection position (P), and that
- the transport device is equipped with an air nozzle (7), which can be selectively actuated for ejecting the container from the gripper (4) and is arranged in the ejection position (P) on the base unit (2).

2. Transport device according to claim 1, **characterised in that** the actuator (5) is arranged on a side opposite an opening (8) of the gripper (4) and/or in the case of a transport device (1) formed as a transport star is arranged radially internally in relation to the position of the grippers (4).

3. Transport device according to claim 1 or 2, **characterised in that** the gripper (4) has two gripper arms (9, 10) which can be pivoted towards one another for gripping a container, wherein the opening lever (6) is arranged at one of the two gripper arms (9, 10), and in this situation is arranged on a side of a pivot axis (11) of the gripper arms (9, 10) opposite the opening (8) of the gripper (4) for removing the container.

4. Transport device according to any one of the preceding claims, **characterised in that** the actuator (5) interacts with the opening lever (6) without coming in contact with it, and in this situation is formed as an electromagnet which can be switched electrically or as a permanent magnet which can be switched mechanically, as well as a permanent magnet arranged at the opening lever (6) of the gripper (4).

5. Transport device according to any one of the preceding claims, **characterised in that** the air nozzle (7) is arranged and aligned at the ejection position (P) in such a way that an air jet produced by means of the air nozzle (7) strikes the container which is to be ejected in such a way that it supports the movement of the container radially and/or vertically downwards.

6. Transport device according to any one of the preceding claims, **characterised in that** the air nozzle (7) is arranged and aligned at the ejection position (P) in such a way that an air jet produced by means of the air nozzle (7) strikes the surface of the container which is to be ejected at an angle which is inclined at an angle radially to the vertical machine axis (MA) of up to 10° in the transport direction.

7. Transport device according to any one of the preceding claims, **characterised in that** the air nozzle (7) is formed in such a way that a complete ejection of the container in the ejection position (P) takes place in less than 100 ms.

8. Transport device according to any one of the preceding claims, **characterised in that** an interaction of the actuator (5) with the opening lever (6) of the gripper (4) takes place only in the region of the ejection position (P), and the gripper (4) is in this situation opened so wide that the container which is to be ejected is ejected lying flat or sliding lengthways on the gripper (4), with a contact ring, securing ring, or neck ring, such that the ejection of the container is supported by means of the air nozzle (7).

9. Transport device according to any one of the preceding claims, **characterised in that** the actuator (5) is arranged on the base unit (2) in a movable manner, in such a way that the actuator (5) can be moved between an actuating position with an interaction of the actuator (5) with the opening lever (6), and a transport position without mechanical or magnetic or other form of interaction of the actuator (5) with the opening lever (6).

10. Transport device according to any one of the preceding claims, **characterised in that** the actuator (5) is a roller which interacts directly with the opening lever (6).

11. Method for the transport of containers in a manner revolving about a vertical machine axis (MA), with the steps
- transporting a container held in a gripper (4) of the transport device (1) as far as an ejection position (P),
- moving the gripper (4) past an actuator (5), arranged stationary in the region of the ejection position (P) for the optional interaction of the actuator (5) with an opening lever (6) of the gripper (4), in order to open the gripper (4) at least partially, and
- as a result, a selective ejection of a container out of the gripper (4) is supported by an air jet coming from an air nozzle (7) arranged in the ejection position (P),
**characterised in that** for this purpose a transport device (1) according to at least one of claims 1 to 10 is used.

## Revendications

1. Dispositif de transport (1) pour le transport de récipients circulant autour d'un axe de machine vertical (MA), avec
- une unité de base (2) fixe et une unité de transport (3) rotative et/ou déplaçable par rapport à l'unité de base (2),
- plusieurs éléments de préhension (4) disposés sur l'unité de transport (3) respectivement pour retenir un récipient à transporter de manière suspendue,
- un moyen de réglage (5) disposé fixement sur l'unité de base (2) dans la zone d'une position d'éjection (P) pour l'éjection sélective de récipients individuels pour l'ouverture au moins temporaire et au moins partielle de l'élément de préhension (4), **caractérisé en ce que**
- l'élément de préhension (4) présente un levier d'ouverture (6) pour l'ouverture au moins partielle de l'élément de préhension (4) lors d'une coopération du levier d'ouverture (6) avec le moyen de réglage (5) sur une plage angulaire comprenant la position d'éjection (P), et que
- le dispositif de transport est équipé d'une buse d'air (7) pouvant être activée sélectivement, disposée dans la position d'éjection (P) sur l'unité de base (2), pour l'éjection du récipient de l'élément de préhension (4).

2. Dispositif de transport selon la revendication 1, **caractérisé en ce que** le moyen de réglage (5) est disposé sur une face opposée à une ouverture (8) de l'élément de préhension (4) et/ou lorsque le dispositif de transport (1) est formé en tant que système de transport en étoile radialement à l'intérieur par rapport à la position des éléments de préhension (4).

3. Dispositif de transport selon la revendication 1 ou 2, **caractérisé en ce que** l'élément de préhension (4) présente deux bras de préhension (9, 10) pivotant l'un par rapport à l'autre pour la préhension d'un récipient, dans lequel le levier d'ouverture (6) est disposé sur un ou les deux bras de préhension (9, 10) et ainsi sur une face d'un axe de pivotement (11) des bras de préhension (9, 10) opposée à l'ouverture (8) de l'élément de préhension (4) pour l'exception du récipient.

4. Dispositif de transport selon l'une quelconque des revendications précédentes, **caractérisé en ce que** le moyen de réglage (5) coopère sans contact avec le levier d'ouverture (6) et ainsi est formé en tant qu'électroaimant de manière à pouvoir être commuté électriquement ou en tant qu'aimant permanent de manière à pouvoir être commuté mécaniquement et un aimant permanent est disposé sur le levier d'ouverture (6) de l'élément de préhension (4).

5. Dispositif de transport selon l'une quelconque des revendications précédentes, **caractérisé en ce que** la buse d'air (7) est disposée sur la position d'éjection (P) et orientée de telle sorte qu'un jet d'air produit au moyen de la buse d'air (7) rencontre le récipient à éjecter, de telle sorte que celui-ci soutient le mouvement du récipient arrivant radialement et/ou verticalement vers le bas.

6. Dispositif de transport selon l'une quelconque des revendications précédentes, **caractérisé en ce que** la buse d'air (7) est disposée sur la position d'éjection (P) et orientée de telle sorte qu'un jet d'air produit au moyen de la buse d'air (7) rencontre la surface du récipient à éjecter selon un angle qui est incliné radialement par rapport à l'axe de machine vertical (MA) jusqu'à 10° dans la direction de transport.

7. Dispositif de transport selon l'une quelconque des revendications précédentes, **caractérisé en ce que** la buse d'air (7) est formée de telle sorte qu'une éjection totale du récipient dans la position d'éjection (P) s'effectue en moins de 100 ms.

8. Dispositif de transport selon l'une quelconque des revendications précédentes, **caractérisé en ce qu'**une coopération du moyen de réglage (5) avec le levier d'ouverture (6) de l'élément de préhension (4) ne s'effectue que dans la zone de la position d'éjection (P) et l'élément de préhension (4) est ainsi ouvert à tel point que le récipient à éjecter est éjecté de manière à reposer ou à glisser sur l'élément de préhension (4) avec une bague d'appui, de blocage ou de centrage de goulot, de sorte que l'éjection s'effectuant du récipient arrive au moyen de la buse d'air (7).

9. Dispositif de transport selon l'une quelconque des revendications précédentes, **caractérisé en ce que** le moyen de réglage (5) est disposé mobile sur l'unité de base (2), de telle sorte que le moyen de réglage (5) est déplaçable entre une position de réglage avec une interaction du moyen de réglage (5) avec le levier d'ouverture (6) et une position de transport sans interaction mécanique ou magnétique ou autre du moyen de réglage (5) avec le levier d'ouverture (6).

10. Dispositif de transport selon l'une quelconque des revendications précédentes, **caractérisé en ce que** le moyen de réglage (5) est un rouleau qui coopère directement avec le levier d'ouverture (6).

11. Procédé pour le transport de récipients circulant autour d'un axe de machine vertical (MA), avec les étapes
- de transport d'un récipient retenu dans un élément de préhension (4) du dispositif de transport (1) jusqu'à une position d'éjection (P),
- de passage de l'élément de préhension (4) devant un moyen de réglage (5) disposé fixement dans la zone de la position d'éjection (P) pour la coopération sélective du moyen de réglage (5) avec un levier d'ouverture (6) de l'élément de préhension (4), afin d'ouvrir au moins en partie l'élément de préhension (4), et
- de cette manière d'une éjection sélective d'un récipient de l'élément de préhension (4), qui est soutenue par un jet d'air provenant d'une buse d'air (7) disposée dans la position d'éjection (P),
**caractérisé en ce qu'**un dispositif de transport (1) selon au moins l'une des revendications 1 à 10 est utilisé à cet effet.
